# EUROPÄISCHE PATENTANMELDUNG

(11) **EP 1 564 310 A1**
(43) Veröffentlichungstag der Anmeldung: **17.08.2005**
(21) Anmeldenummer: 04028833.4
(22) Anmeldetag: 06.12.2004
(51) Int. Cl.: C23C 10/02, B23K 35/30

(54) **Verfahren und Vorrichtung zum Behandeln metallischer Körper**

(30) Priorität: 15.01.2004 DE 102004002365
(71) Anmelder: Behr GmbH & Co. KG, 70469 Stuttgart (DE)
(72) Erfinder: Angermann, Hans-Heinrich Dr.rer.nat., 70197 Stuttgart (DE)

(57) **Zusammenfassung**

Verfahren zum Behandeln metallischer Körper mit folgenden Verfahrensschritten:
Wärmebehandlung wenigstens eines metallischen Körpers unter vorgegebenen physikalischen Bedingungen;
Nachbehandlung der wärmebehandelten Körpers durch Gasdiffusionsbehandlung.

## Beschreibung

Die vorliegende Erfindung bezieht sich auf ein Verfahren und eine Vorrichtung zum Behandeln metallischer Körper. Die Erfindung wird in Bezug auf die Behandlung einer Bipolarplatte einer Brennstoffzelle beschrieben. Es wird jedoch darauf hingewiesen, dass das erfindungsgemäße Verfahren auch auf andere metallische Bauteile, wie sie beispielsweise in Wärmeübertragern in Kraftfahrzeugen oder in der Peripherie von Brennstoffzellen Anwendung finden. Das Verfahren eignet sich insbesondere für solche metallische Bauteile, die beim Betrieb hohen thermischen Belastungen insbesondere mit Blick auf Oxidation und mechanischer Festigkeit und im abgekühlten Zustand hohen korrosiven Belastungen unterliegen.

Brennstoffzellen sind aus dem Stand der Technik bekannt. Prinzipiell weisen sie zwei Elektroden und einen zwischen diesen Elektroden vorgesehenen Elektrolyten auf. Dabei werden die Elektroden durch den Elektrolyten derart getrennt, dass die an der chemischen Reaktion beteiligten Medien, im Allgemeinen Wasserstoff und Sauerstoff, direkt miteinander in Verbindung kommen. Als Elektrolyten kommen unter anderem je nach Art der Brennstoffzelle alkalische Laugen, Karbonatschmelzen, Metall-Keramik Werkstoffe (Cermets) und/oder Oxidkeramiken in Betracht. Man kann zwischen solchen Brennstoffzellen, die bei niedrigen Betriebstemperaturen arbeiten, solchen, die bei mittleren Betriebstemperaturen arbeiten und solchen, die bei hohen Betriebstemperaturen arbeiten, unterscheiden. Zu den letztgenannten Brennstoffzellen zählen die sogenannten SOFC (Solid Oxide Fuel Cell)-Brennstoffzellen. Diese werden von Temperaturen im Bereich von 700 bis 1100 Grad Celsius betrieben. Wenn für die praktische Anwendung, die von einer Brennstoffzelle zur Verfügung gestellte Spannung nicht ausreicht, müssen eine Vielzahl von Zellen hintereinander beziehungsweise nebeneinander geschaltet werden. Aus diesem Grund entsteht das Erfordernis nach einer sogenannten Bipolarplatte oder einem Interkonnektor, der als Träger und elektrische Verbindung für die einzelnen Elektroden dient. Auch diese Bipolarplatte muss den aufgrund der hohen Betriebstemperaturen entstehenden Problemen gewachsen sein.

Beim Betrieb wird üblicherweise der Kathodenseite der Brennstoffzelle beziehungsweise der Vielzahl der Brennstoffzellen Umgebungsluft zugeführt. Da dabei für die Bipolarplatten und auch für die die Brennstoffzelle umgebenden Wärmeübertrager häufig ferritische bzw. ferritische und insbesondere austenitische Edelstähle verwendet werden, welche schützende Schichten aus Cr-Oxid ausbilden, kann es aufgrund der hohen Temperaturen in normaler Luft zu einer Abdampfung von Chrom(Cr)-Oxiden kommen, die letztlich zu hohen elektrischen Verlusten in der SOFC-Zelle führen können.

Aus dem Stand der Technik sind Verfahren bekannt, die diesem Problem entgegenwirken.

In der DE 100 25 108 A1, deren Beschreibung in die hier vorliegende Offenbarung einbezogen wird, wird vorgeschlagen, einen ferritischen Edelstahl als Grundwerkstoff zu verwenden, der speziell ― insbesondere mit erhöhten Gehalten an Mangan ― legiert ist. Auf diese Weise bildetn sich die auf konventionellen Edelstählen vorliegenden, auf Cr₂O₃ basierenden Mischoxide nicht mehr aus, sondern eine MnCr₂O₄-Spinellphase. Diese weist verringerte Chromabdampfraten auf. Der Nachteil ist, dass die Abdampfraten immer noch so hoch sind, dass im Langzeitbetrieb Leistungsverluste in der Zelle auftreten. Außerdem ist die Festigkeit von ferritischen Werkstoffen bei den hohen Temperaturen zu gering für die Verwendung beispielsweise in einem Wärmetauscher und es besteht das Risiko einer σ―Phasenbildung und/oder 475°-Versprödung, wenn sich die Temperatur der Komponente über das gesamte Teil oder auch nur partiell über die Komponente auf mittleren Temperaturen zwischen 400 und 600°C befindet.

Mit σ-Phase wird eine Eisen-Chrom-intermetallische Phase bezeichnet, welche die Sprödigkeit in nachteiliger Weise erhöht. Ebenso bezeichnet die 475-Grad-Versprödung eine nachteilige Erhöhung der Sprödigkeit durch sich zwischen 450 und 500 Grad Celsius bildende chromhaltige Phasen. Die 475°-Versprödung beruht auf einer Ausscheidung von Spurenelementen wie P, As, Sb, Sn auf den Korngrenzen.

Ferner ist bekannt, Edelstähle mit einer Schutzschicht, zum Beispiel mit einer Perowskit-Schutzschicht mittels des Vakuum-Plasma-Spray-Verfahrens zu überziehen. Auf diese Weise kann eine Reduktion der Chromabdampfraten um einen Faktor > 100 erreicht werden. Die Auftragung der Perowskitschichten ist jedoch relativ aufwendig. Bei diesen Schutzschichten besteht auch generell das Risiko, dass diese abplatzen können. Daneben lässt sich dieses Verfahren nicht auf vorkassettierte Wärmeübertrager oder vor dem Verfahren dichtgelötete Wärmeübertrager anwenden.

Schließlich können anstelle der Edelstähle auch Nickelbasislegierungen zum Einsatz kommen, die jedoch unter Umständen teurer sind als Edelstähle.

Ferner ist aus dem Stand der Technik ein Verfahren zur Gasdiffusionsbeschichtung von metallischen Bauteilen bekannt. Dabei wird in einem Prozessbehälter, in dem zu beschichtenden Bauteile angeordnet sind, das Beschichtungsgut mit einem Metallhalogenit als Beschichtungsgas in Kontakt gebracht. Bei einer vorgegebenen Beschichtungstemperatur und einer vorgegebenen Beschichtungsdauer führt dies zur Bildung einer Diffusionsschicht und einem vorgegebenen Beschichtungsmetallgehalt in der Bauteiloberfläche.

Insbesondere bei der Herstellung von Komponenten eines Wärmetauschers ist jedoch eine genauere Spezifizierung der entsprechenden Komponenten und der Vorbehandlung der entsprechenden Komponenten, insbesondere eine Wärmebehandlung, wie beispielsweise ein Lötverfahren, unter Umständen wünschenswert.

Der vorliegenden Erfindung liegt somit die Aufgabe zugrunde, ein Verfahren zur Verfügung zu stellen, bei welchem Wärmeübertrager, allgemein Vorrichtungen zum Austausch von Wärme und sonstige Stahl- und Edelstahlkomponenten für Hochtemperaturanwendung, insbesondere, aber nicht ausschließlich, für den Einsatz im Rahmen eines SOFC-Brennstoffzellensystems insbesondere kostengünstig so wärmebehandelt und/oder beschichtet werden können, dass die Bildung von flüchtigen Cr-Verbindungen reduziert und gleichzeitig die Oxidations- und Korrosionsbeständigkeit der Bauteile erhöht ist.

Dies wird erfindungsgemäß durch ein Verfahren nach Anspruch 1 und eine Vorrichtung nach Anspruch 13 erreicht. Vorteilhafte Weiterbildungen sind Gegenstand der Unteransprüche.

Bei dem erfindungsgemäßen Verfahren zum Behandeln metallischer Körper wird zunächst wenigstens ein metallischer Körper unter vorgegebenen physikalischen Bedingungen wärmebehandelt. Nach dieser Wärmebehandlung findet eine Nachbehandlung des wärmebehandelten Körpers durch eine Gasdiffusionsbehandlung statt.

Bevorzugt handelt es sich bei der Wärmebehandlung um ein Verfahren, welches aus einer Gruppe von Verfahren ausgewählt wurde, welche Schweißen, Diffusionsschweißen, Löten und dergleichen enthält. Bevorzugt wird wenigstens ein vorgeschweißtes Bauteil in einem Prozessbehälter in dem ersten Verfahrensschritt einer definierten Wärmebehandlung unter definierten Umständen unterworfen, wobei diese Behandlung zur Gasdichtheit führt, das heißt dazu, dass ein Austritt von Gasen aus der zu fertigenden Vorrichtung im Wesentlichen verhindert wird. Erfindungsgemäß müssen die Parameter für die Wärmebehandlung und die Parameter für die Nachbehandlung aufeinander abgestimmt werden, das heißt, definierten Beschränkungen unterliegen. Diese Vorgabe definierter Beschränkungen ist insbesondere, aber nicht ausschließlich, nötig, um zu verhindern, dass die durch die Wärmebehandlung, wie beispielsweise das Löten, bewirkten Effekte zunichte gemacht werden, beispielsweise ein entstandenes lötgedichtetes Teil in seinem werkstoffkundlichen Erscheinungsbild negativ beeinflusst oder gar wieder zerstört wird.

Bevorzugt handelt es sich also bei der Wärmebehandlung nicht nur um eine Erwärmung des zu bearbeitenden Gutes, sondern im Rahmen der Wärmebehandlung wird zusätzliches Material, wie insbesondere, aber nicht ausschließlich, Lot eingesetzt.

Das bevorzugte Vorschweißen dient dazu, eine Vorspannung des zu behandelnden Bauteils zu erreichen. Neben einer Fixierung über beispielsweise aufgeschweißte Kästen könnten auch einfache Schweißnähte Anwendung finden. Daneben kann jedoch auch auf eine Vorspannung bzw. Vorfixierung des wenigstens einen Bauteils verzichtet werden, und anstelle dessen im Prozessbehälter während der Wärmebehandlung das Bauteil insbesondere mit Gewichten beschwert oder allgemein mit Kräften beaufschlagt werden, welche eine vorbestimmte Lage der einzelnen Bauteile zueinander gewährleisten. Insbesondere in dem Fall, in dem es sich bei der Wärmebehandlung um ein Lötverfahren handelt, können die Bauteile mit den Gewichten derart beschwert werden, dass geeignet schmale Lötspalte gewährleistet werden. Das oben erwähnte Vorspannen ist unter Umständen vorteilhaft, da dann auf die Einbringung von Gewichten verzichtet werden kann, die eine Reduzierung der Nutzchargenlast des Ofens zur Folge haben. Die Ausbildung von schmalen Lötspalten ist vorteilhaft, da auf diese Weise die Zuverlässigkeit bei der Bildung der Lötverbindung und die Zuverlässigkeit der metallischen Komponente im späteren Betrieb erhöht werden kann.

Bevorzugt handelt es sich also bei der Wärmebehandlung nicht nur um eine Erwärmung des zu bearbeitenden Guts, sondern im Rahmen der Wärmebehandlung wird zusätzliches Material, wie insbesondere, aber nicht ausschließlich, Lot eingesetzt.

Für die Wärmebehandlung in Form eines Lötverfahrens kann das Bauteil mit Lot in Folienform belotet werden. Daneben ist es jedoch auch möglich, die Schichtbleche mit Paste zu belegen. In diesem Fall müsste das Bauteil bevorzugt mit Gewichten belegt oder mit Vorspannmitteln, wie insbesondere, aber nicht ausschließlich, Federn vorgespannt werden, da das Volumen der Paste beim Lötvorgang erheblich schrumpft.

Bevorzugt finden die Wärmebehandlung und die Nachbehandlung in demselben Prozessbehältnis statt. Auf diese Weise kann das Verfahren vereinfacht werden und damit die Kosten für die Herstellung reduziert werden. Es ist jedoch auch möglich, bereits in einem separaten Arbeitsgang vorgelötete Wärmeübertrager oder andere Bauteile, wie Bipolarplatten, anschließend mittels Gasdiffusion zu beschichten. In diesem Falle müssen die Verfahren bezüglich ihrer Randbedingungen nicht in der gleichen Weise aufeinander abgestimmt werden, wie wenn das vollständige Verfahren in einem Prozessbehältnis abläuft, da in diesem Fall die Prozessbedingungen für die einzelnen Verfahrensschritte separat eingestellt werden können.

Bevorzugt findet die Wärmebehandlung unter vorgegebenen Bedingungen im Vakuum oder in einer Atmosphäre aus einem Gas statt, welches aus einer Gruppe von Gasen ausgewählt ist, welche Wasserstoff, Edelgase, Stickstoff und dergleichen enthält. Die Behandlung im Vakuum beziehungsweise in den obengenannten Atmosphären dient dazu, eine Oxidation zu verhindern, für die Benetzung des Grundwerkstoffes mit dem Lot die Oberfläche des Grundwerkstoffes zu reduzieren und so eine erhöhte Gasdichtigkeit zu bewirken.
Bevorzugt wird wenigstens ein Körper vor und/oder während der Wärmebehandlung vorgespannt und/oder mit Gewichtskräften beaufschlagt. Auf diese Weise wird, wie oben ausgeführt, erreicht, dass die einzelnen Bauteile eines Körpers zueinander eine vorbestimmte Lage einnehmen, beziehungsweise - auch in dem Fall, in dem nur ein einziges Bauteil vorliegt ― vorgegebene, bevorzugt möglichst kleine Lötspalte entstehen.

Bevorzugt wird für die Wärmebehandlung ein Lot verwendet, welches ein Material enthält, welches aus einer Gruppe von Materialien ausgewählt ist, welche Kupfer (Cu), Kobalt (Co), Gold (Au) und/oder Nickel (Ni) enthält. Auch Mischungen aus diesen Materialien sind denkbar. Dabei kann das Lot im Wesentlichen vollständig aus diesen Materialien bestehen, oder auch jeweils auf Basis der genannten Materialien gebildet werden, wie beispielsweise auf Kupferbasis oder auf Nickelbasis.

Die genannten Lote bieten sich insbesondere für Hochtemperaturanwendungen an. Ferner wird bevorzugt als Lot ein Material verwendet, welches Nickel mit einem Chromgehalt von mehr als 2 Gewichtsprozent, bevorzugt von mehr als 5 Gewichtsprozent und besonders bevorzugt von mehr als 7 Gewichtsprozent enthält. Dieses Lot ist insofern vorteilhaft, als der Lötnaht auf diese Weise eine nachhaltigere Oxidations- und/oder Korrosionsbeständigkeit verliehen wird.

Die genannten Lote sind kommerziell erhältlich und weisen, wie im Falle von Loten auf Basis von Nickel 102 empfohlene Löttemperaturen von 1040 Grad Celsius, bevorzugt von 1170 bis 1195 Grad Celsius auf (letzteres im Falle von Nickelloten auf Basis von Nickel 105 mit Cr-Gehalten von 15 bis 19 Gew.-%). Diese Löttemperaturen liegen grundsätzlich im Bereich der für eine Gasdiffusionsbehandlung, das heißt, für die Nachbehandlung empfohlenen Temperaturen. Der Beschichtungsvorgang wird bei einer Temperatur im Bereich von 1000 Grad Celsius bis 1200 Grad Celsius, bevorzugt im Bereich von 1080 Grad Celsius, vorgenommen. Diese Temperaturen sind niedriger als die bevorzugten Löttemperaturen, so dass durch die Nachbehandlung keine Aufschmelzung der Lötverbindungen oder insbesondere des Grundwerkstoffes auftritt.

Um derartiges Aufschmelzen zu vermeiden, werden sowohl die Bauteile definiert als auch in vorgegebener Weise wärmebehandelt. Bevorzugt wird als Lot ein Material verwendet, welches Nickel mit einem geringen Gehalt an Bor und/oder Phosphor aufweist (viele Ni-Basislote weisen in obigen Sinne hohe B-Gehalte von ca. 3 Gew.-% auf). Der Anlass hierfür ist, dass in der Nachbehandlung die Beschichtungstemperatur über einen Zeitraum von etwa sechs Stunden gehalten wird. Die Anwendung einer solchen Wärmebehandlung, das heißt, mit einer Temperatur von etwa 1080 Grad Celsius im Zeitraum von sechs Stunden, führte möglicherweise dazu, dass das Lötgut innerhalb sich selbst durchlegiert, das heißt, dass schmelzpunkterniedrigende Elemente im Nickellot, wie Phosphor und insbesondere Bor, als relativ kleine Elemente schnell in den Grundwerkstoff eindiffundieren und dort niedrigschmelzende Verbindungen ausbilden.

Daher empfiehlt es sich, als Lotlegierung eine Nickellegierung mit niedrigem Gehalt, insbesondere an Bor, aber auch an Phosphor, zu verwenden. Als Möglichkeit kommt beispielsweise Nickel-105-Lot ohne B und P (das schmelzpunkterniedrigende Element ist hier Silizium) in Betracht, sowie Varianten dieser Legierung für Lötfolien, wie beispielsweise MBF50, MBF51 oder MBF53 (bei den genannten Bezeichnungen handelt es sich um Verkaufsnamen der Firma Hitachi Metals, vormals Honeywell), insbesondere mit B-Gehalten von lediglich 1,4-1,5 Gew.-%.

Eine weitere Möglichkeit, diese Diffusion zu verhindern, besteht darin, die Beschichtungszeit zu verkürzen oder bevorzugt die Beschichtungstemperatur zu senken.

Da, wie oben ausgeführt, bei einem bevorzugten Verfahren beide Behandlungsschritte in dem gleichen Prozessbehältnis ablaufen, ist es möglich, dass bereits bei der Wärmebehandlung, das heißt insbesondere dem Löten, das für die Nachbehandlung vorgesehene Metallhalogenit entsteht, und die Lötung stört. In diesem Falle sollte die Bildung oder der Kontakt des Lötgutes mit dem Metallhalogenit zunächst vermieden oder wenigstens reduziert werden.

Dies kann bevorzugt dadurch geschehen, dass eine das Beschichtungsmaterial ― das heißt insbesondere, aber nicht ausschließlich das Metallhalogenit ― ausgebende Einrichtung vorgesehen ist, wobei das zu behandelnde Material beziehungsweise die dieses Material ausgebende Einrichtung während der Wärmebehandlung wenigstens zeitweise gegenüber dem zu beschichtenden Bauteil abgeschirmt ist. So kann beispielsweise die das Beschichtungsmaterial ausgebende Einrichtung, das heißt die Beschichtungsmetallquelle, während der Wärmebehandlung, das heißt, während des Lötens, abgedeckt werden, wobei die Abdeckung wenigstens zeitweise während der Wärmebehandlung, das heißt des Lötens, erfolgt, bevorzugt während des kompletten Zeitraums der Wärmebehandlung.

Daneben ist es auch möglich, dass die Temperatur der das Beschichtungsmaterial ausgebenden Einrichtung zumindest während der Wärmebehandlung auf eine vorgegebene Temperatur eingestellt wird. Bei dieser Temperatur handelt es sich dann bevorzugt um eine für den exothermen Bildungsprozess des Metallhalogenits zu hohe Temperatur. Diese Einstellung auf eine erhöhte Temperatur kann dadurch durchgeführt werden, dass eine Kühlung für den Prozess reduziert oder sogar eingestellt wird. Ferner wird diese erhöhte Temperatur auch dadurch möglich, dass die empfohlene Löttemperatur höher ist als die empfohlene Beschichtungstemperatur, so dass besonders bevorzugt durch jeglichen Verzicht auf Kühlung eine erhöhte Temperatur der das Beschichtungsmaterial ausgebenden Einrichtung eingestellt werden kann.

Schließlich ist. es in einer weiteren bevorzugten Variante auch möglich, die Temperatur der das Beschichtungsmaterial ausgebenden Einrichtung, das heißt der Beschichtungsquelle, so weit abzusenken, dass die für die Bildung des Metallhalogenits nötige Temperatur unterschritten wird. Dies kann durch eine verstärkte Kühlung bewirkt werden.

In einer weiteren bevorzugten Ausführungsform des erfindungsgemäßen Verfahrens wird während der Gasdiffusionsbehandlung eine vorgegebene Beschichtungstemperatur über einen vorgegebenen Zeitraum eingehalten, wobei der Zeitraum zwischen drei und neun Stunden, bevorzugt zwischen vier und acht Stunden und, besonders bevorzugt, bei etwa sechs Stunden liegt. Durch diese unterschiedlichen Zeiträume kann Einfluss auf die oben beschriebene Diffusion kleiner Bor- und/oder Phosphoranteile einerseits, wie auch auf die letztlich herzustellende Schicht andererseits, genommen werden, da das Ausmaß der Eindiffusion je nach Dauer des Verfahrens mehr oder weniger ausgeprägt ist.

Das Halten der Komponente im Behältnis bei ca. 1080°C hat neben dem eigentlichen Beschichten unter Umständen den Effekt, dass Si-haltige spröde Ausscheidungsphasen, die bei Verwendung von Si-haltigen Ni-Loten wie z.B. Lotfolien auf Basis MBF50 evtl. in breiteren Lötnähten entstehen können, durch ganze oder teilweise Auflösung der metastabilen spröden Phasen und Abdiffusion des Siliziums in den Grundwerkstoff zumindest reduziert werden.

Als Beschichtungsmetalle kommen insbesondere, aber nicht ausschließlich, Chrom und Aluminium in Frage, oder auch Calcium, Magnesium, Titan, Silizium oder eine Mischung dieser Elemente. Für eine Anwendung in einem Bauteil in einem SOFC-Brennstoffzellensystem eignet sich insbesondere Aluminium, da insbesondere eine aluminiumhaltige Oberfläche eine zumindest verringerte Bildung von flüchtigen Chromverbindungen bewirkt, beziehungsweise eine vollständiges Unterbleiben derselben.

Der genannte Stoff beziehungsweise die Mischung aus den Elementen liegt in einer bevorzugten Ausführungsform als Pulver bzw. Granulat vor. Dabei kann während der Diffusionsbehandlung der zu beschichtende Stoff, das heißt das Metallhalogenit, hinsichtlich seiner Konzentration über den gesamten Zeitraum des Beschichtungsverfahrens konstant gehalten werden; es ist jedoch auch möglich, die Konzentration während des Zeitraums der Beschichtung zu variieren, beispielsweise über die Zeit hinweg von einer ersten erhöhten Konzentration zu einer zweiten niedrigeren Konzentration abzusenken.

Auf diese Weise ist es möglich, die gesamten Beschichtungszeiten zu reduzieren, und damit das Problem des Eindiffundierens von Bor- und Phosphorteilen zu reduzieren.

Die Erfindung ist ferner auf eine Vorrichtung zum Behandeln von metallischen Körpern gerichtet, welche wenigstens ein Behältnis aufweist, in welches wenigstens ein zu behandelnder Körper eingebracht wird, eine Heizeinrichtung, welche den Körper auf eine vorgegebene Temperatur erwärmt und einer ein Beschichtungsmaterial ausgebenden Einrichtung, um den Körper mit einem vorgegebenen Beschichtungsmaterial im Wege der Gasphasendiffusionsbehandlung zu beschichten. Bevorzugt sind auch Zuleitungen vorgesehen, um dem Behältnis ― und damit dem Körper ― Gase, wie insbesondere, aber nicht ausschließlich, Wasserstoff und/oder Edelgase, zuzuführen oder in dem Behältnis ein Vakuum zu erzeugen.

Der Vorteil des erfindungsgemäßen Verfahrens liegt darin, dass das eingangs genannte Problem der Leistungseinbussßen der SOFC-Brennstoffzelle durch abgedampfte Chromverbindungen aus der Kathoden-Bipolarplatte oder vorgeschalteten Elementen gemildert oder sogar gelöst wird. Infolge der Verminderung der Chromabdampfung kann als Material für die Bipolarplatte und andere Komponenten niedrig legierterer ― und damit kostengünstigerer ― Hochtemperaturedelstahl verwendet werden und auf die eingangs erwähnte aufweändige ― und eventuell auch nicht nachhaltige - Beschichtung verzichtet werden.

Die Werkstoffe können, wie erwähnt, zur Herstellung der Bipolarplatten und anderer, die Brennstoffzelle umgebende Komponenten, wie Wärmeüberträgern oder auch Anodengasnachbrennern, verwendet werden. Allgemein kann das erfindungsgemäße Verfahren für Werkstoffe verwendet werden, welche beim Betrieb hohen Temperaturen unterworfen sind. Durch das erfindungsgemäße Verfahren wird es ferner möglich, auf eine Berücksichtigung von eventueller Taupunktkorrosion bei der Werkstoffauswahl zu verzichten, was wiederum den Einsatz niedriger legierter und kostengünstigerer Werkstoffe erlaubt.

Wie erwähnt, wird auch bei dem Einsatz außerhalb einer SOFC-Brennstoffzelle eine verringerte Chromabdampfung bewirkt, die bereits die Verarmung des Werkstoffes an Chrom verringert, und damit wird die Zeit bis zu einer Break-Away-Oxidation verlängert oder diese völlig verhindert.

Insbesondere die erwähnte Ausführungsform, bei welcher die Wärmebehandlung, das heißt, insbesondere, aber nicht ausschließlich, die Lötung einerseits, und die Beschichtung der Bauteile mittels Gasdiffusion andererseits, in einem Prozessbehälter stattfinden, ist besonders kostengünstig.

Die mit dem erfindungsgemäßen Verfahren der erfindungsgemäßen Vorrichtung hergestellten Komponenten, beispielsweise die Komponenten einer Brennstoffzelle, eignen sich insbesondere, aber nicht ausschließlich, für den Einsatz in Kraftfahrzeugen.

## Patentansprüche

1. Verfahren zum Behandeln metallischer Körper mit folgenden Verfahrensschritten:
- Wärmebehandlung wenigstens eines metallischen Körpers unter vorgegebenen physikalischen Bedingungen;
- Nachbehandlung der wärmebehandelten Körpers durch Gasdiffusionsbehandlung

2. Verfahren nach Anspruch 1, **dadurch gekennzeichnet, dass** der metallische Körper vor der Wärmebehandlung durch ein Verfahren behandelt wurde, welches aus einer Gruppe von Verfahren ausgewählt wurde, welche Schweißen, Diffusionsschweißen, Löten oder dergleichen enthält.

3. Verfahren nach wenigstens einem der vorangegangenen Ansprüche, **dadurch gekennzeichnet, dass** die Wärmebehandlung und die Nachbehandlung in demselben Prozessbehältnis stattfindet.

4. Verfahren nach wenigstens einem der vorangegangenen Ansprüche, **dadurch gekennzeichnet, dass** die Wärmebehandlung unter vorgegebenen Bedingungen im Vakuum erfolgt.

5. Verfahren nach wenigstens einem der vorangegangenen Ansprüche, **dadurch gekennzeichnet, dass** die Wärmebehandlung unter vorgegebenen Bedingungen in einer Atmosphäre aus einem Gas erfolgt, welches aus einer Gruppe von Gasen ausgewählt ist, welche Wasserstoff, Edelgase, Stickstoff und dergleichen enthält.

6. Verfahren nach wenigstens einem der vorangegangenen Ansprüche, **dadurch gekennzeichnet, dass** der Körper vor und/oder während der Wärmebehandlung vorgespannt und/oder mit Gewichtskräften beaufschlagt wird.

7. Verfahren nach wenigstens einem der vorangegangenen Ansprüche, **dadurch gekennzeichnet, dass** für die Wärmebehandlung ein Lot verwendet wird, welches ein Material enthält, das aus einer Gruppe von Materialien ausgewählt ist, welche Kupfer (Cu), Kobalt (Co), Gold (Au) und/oder Nickel (Ni) enthält.

8. Verfahren nach wenigstens einem der vorangegangenen Ansprüche, **dadurch gekennzeichnet, dass** als Lot ein Material verwendet wird, welches Nickel mit einem Chromgehalt von mehr als 2 Gewichtsprozent, bevorzugt von mehr als 5 Gewichtsprozent und, besonders bevorzugt, von mehr als 7 Gewichtsprozent enthält.

9. Verfahren nach wenigstens einem der vorangegangenen Ansprüche, **dadurch gekennzeichnet, dass** als Lot ein Material verwendet wird, welches Nickel mit einem geringen Gehalt an Bor (B) und/oder Phosphor (P) aufweist.

10. Verfahren nach wenigstens einem der vorangegangenen Ansprüche, **dadurch gekennzeichnet, dass** eine ein Beschichtungsmaterial ausgebende Einrichtung vorgesehen ist, wobei das zu behandelnde Material während der Wärmebehandlung wenigstens zeitweise gegenüber der das Beschichtungsmaterial ausgebenden Einrichtung abgeschirmt ist.

11. Verfahren nach wenigstens einem der vorangegangenen Ansprüche, **dadurch gekennzeichnet, dass** die Temperatur der das Beschichtungsmaterial ausgebenden Einrichtung zumindest während der Wärmebehandlung auf eine vorgegebene, insbesondere erhöhte Temperatur eingestellt wird.

12. Verfahren nach wenigstens einem der vorangegangenen Ansprüche, **dadurch gekennzeichnet, dass** die Temperatur der das Beschichtungsmaterial ausgebenden Einrichtung zumindest während der Wärmebehandlung unter einen vorgegebenen Wert abgesenkt wird.

13. Verfahren nach wenigstens einem der vorangegangenen Ansprüche, **dadurch gekennzeichnet, dass** wenigstens während der Gasdiffusionsbehandlung eine vorgegebene Beschichtungstemperatur über einen vorgegebenen Zeitraum eingehalten wird, wobei der Zeitraum zwischen 3 und 9 Stunden, bevorzugt zwischen 4 und 8 Stunden und, besonders bevorzugt, bei etwa 6 Stunden liegt.

14. Vorrichtung zum Behandeln von metallischen Körpern mit wenigstens einem Behältnis, in welches wenigstens ein zu behandelnder Körper eingebracht wird, einer Heizeinrichtung, welche den Körper auf eine vorgegebene Temperatur erwärmt und einer ein Beschichtungsmaterial ausgebenden Einrichtung, um den Körper mit einem vorgegebenen Material im Wege der Gasdiffusionsbehandlung zu beschichten.

15. Verwendung des Verfahrens nach wenigstens einem der vorangegangenen Ansprüche zur Herstellung von Komponenten einer Brennstoffzelle, insbesondere für Kraftfahrzeuge.

16. Verwendung des Verfahrens nach wenigstens einem der vorangegangenen Ansprüche zur Herstellung von Komponenten einer Vorrichtung zur Übertragung von Wärme, insbesondere für Kraftfahrzeuge.
